# EUROPÄISCHE PATENTSCHRIFT

(11) **EP 3 217 057 B1**
(45) Veröffentlichungstag und Bekanntmachung des Hinweises auf die Patenterteilung: **22.07.2020**
(21) Anmeldenummer: 17156192.1
(22) Anmeldetag: 15.02.2017
(51) Int. Cl.: F16L 5/02, H02G 3/22, G02B 6/44

(54) **VORRICHTUNG UND VERFAHREN ZUM BEFESTIGEN UND ABDICHTEN EINER LEITUNGSDURCHFÜHRUNG IN EINEM WANDDURCHGANG EINER GEBÄUDEWAND**
DEVICE AND METHOD FOR FIXING AND SEALING A PIPE LEAD THROUGH IN A WALL PASSAGE OF A BUILDING WALL
DISPOSITIF ET PROCÉDÉ DE FIXATION DESTINÉ À RENDRE ÉTANCHE UN PASSAGE DE CONDUITE DANS UNE CLOISON D'UN BÂTIMENT

(30) Priorität: 07.03.2016 DE 102016104129
(43) Veröffentlichungstag der Anmeldung: 13.09.2017
(73) Patentinhaber: gabo Systemtechnik GmbH, 94559 Niederwinkling (DE)
(72) Erfinder: Geiger, Alexander, 94559 Niederwinkling (DE); Karl, Markus, 94327 Bogen (DE); Lederer, Roland, 94374 Schwarzach (DE)
(74) Vertreter: Schmid, Nils T.F.

(56) Entgegenhaltungen:
- EP-A1- 2 071 688
- EP-A1- 2 410 222
- EP-A1- 2 645 507
- DE-A1-102010 026 082
- DE-U1-202012 002 751
- US-A- 2 897 533
- US-A1- 2009 315 275
- US-A1- 2013 313 787

## Beschreibung

Die Erfindung betrifft eine Vorrichtung und ein Verfahren zum Befestigen und Abdichten einer Leitungsdurchführung in einem Wanddurchgang einer Gebäudewand. Des Weiteren betrifft die Erfindung eine Verteilermanschette, wie eine Durchlasshülse, Injektionshülse oder Siebhülse, für eine derartige Vorrichtung.

Es besteht auf dem technischen Gebiet der Hausein- und -durchführung im Mauerwerk eines Gebäudes das allgemeine Montagebedürfnis, elektrische Kabel, Lichtwellenleiter und dergleichen über ein Leerrohr in ein Gebäude einzuführen. Es ist bekannt, ein Leerrohr in einem Wanddurchgang möglichst fluiddicht zu befestigen, um in dem Leerrohr anschließend sogenannte Mikrorohre und/oder Mikrorohrbündel und/oder Datenkabel und/oder sonstige Leiter, wie Lichtwellenleiter, unterzubringen. Der aufgebohrte Wanddurchgang sollte nach Belegung mit dem Leerrohr fluiddicht abgeschlossen sein.

Eine Vorrichtung zum Befestigen und Abdichten der durch eine Wandöffnung der Gebäudewand führenden Leitungsdurchführung, wie eines Leerrohres, ist aus EP 2 410 222 B1 bekannt. Eine Verteilermanschette als starres Durchlassrohr wird in einem Abstand konzentrisch zwischen der Durchgangswandung und dem zu befestigenden Leerrohr angeordnet, wobei an einer Gebäudewandaußenseite ein Dichtungswulst vorgesehen ist, welcher über eine an der Gebäudewandinnenseite zu betätigende Spannvorrichtung gegen die Gebäudewandaußenseite verspannt werden kann. In einem aufgrund der konzentrischen Anordnung des Leerrohrs und der Verteilermanschette gebildeten ringförmig umlaufenden Spaltraum ist ein Befüllungsschlauch tief eingeführt, über den in die Mitte eines Hohlblocksteins der Gebäudewand eine zäh fließende Aushärtsubstanz einbringbar ist. Aufgrund einer Vielzahl von kleinen in der Verteilermanschette eingearbeiteten Löchern, die in Umfangsrichtung und Längsrichtung gleichmäßig in einem Abstand von wenigen Millimetern angeordnet sind, gelangt die Aushärtsubstanz an die Außenseite der starren Verteilermanschette, um weiter in den Hohlblockstein am Wanddurchgang austreten zu können und nach dem Aushärten einen fluiddichten Abschluss zur Befestigung der Verteilermanschette und des darin befindlichen Leerrohres an dem Wanddurchgang zu schaffen.

Bei einer derartigen bekannten Befestigungs- und Abdichtvorrichtung ist es von Nachteil, dass der für das Einziehen von Kabeln und Leitern zur Verfügung stehende Raum in dem Leerrohr begrenzt ist und aufgrund des Einsatzes eines einzuführenden Injektionsschlauches zwischen dem Durchlassrohr und dem Leerrohr ein relativ großer Anteil des zur Verfügung stehenden Volumens ungenutzt verloren geht. An dem Schlauch ist ein Anschlussstück angebracht, der an der Innenseite der Gebäudewand positioniert ist. Es zeigte sich bei dieser Anordnung, dass ein hoher Druck in dem Schlauch erzeugt werden muss, um die Substanz nahe der Gebäudeaußenwandseite zu bringen, wo bevorzugt die Befestigungsabdichtung zu erreichen ist, um einen Feuchtigkeitseintritt über den Wanddurchgang in das Gebäude zu vermeiden.

EP 2 071 688 B1 offenbart ein Verfahren zur Befestigung einer Leitungsdurchführung in dem Wanddurchgang der Gebäudewand sowie eine Verteilermanschette als flexiblen Schlauch. Die Besonderheit der Verteilermanschette besteht darin, aus einem flexiblen Mantel zu bestehen, in dem Perforationen eingebracht sind, welche einen Austritt der Aushärtsubstanz erst bei Überschreiten eines Druckschwellenwerts zulässt.

DE 20 2012 002 751 U1 betrifft eine LWL-Hauseinführung. Aus EP 2 645 507 A1 geht eine Leitungsdurchführung zur Befestigung in einer Gebäudewand hervor.

Es ist Aufgabe der Erfindung, ein bekanntes Verfahren oder eine bekannte Vorrichtung dahingehend zu verbessern, dass eine präzise Einbringung der Aushärtsubstanz insbesondere an der Außenseite der Gebäudewand ermöglicht wird und ein möglichst großes Belegevolumen für das Einziehen von Kabeln und Leitern in der Leitungsdurchführung zur Verfügung gestellt wird.

Diese Aufgabe wird durch die Merkmale der unabhängigen Ansprüche 1 und 14 gelöst.

Danach ist eine Vorrichtung zum Befestigen und Abdichten einer durch einen Wanddurchgang einer Gebäudewand führenden Leitungsdurchführung, wie eines Leerrohrs, an und gegenüber der Gebäudewand insbesondere im Bereich des Wanddurchgangs vorgesehen. Die Abdicht- und Befestigungsvorrichtung umfasst eine die Leitungsdurchführung umgebende Verteilermanschette, die entweder starr als Hülse oder flexibel als Schlauch insbesondere mit einer Wandstärke von weniger als 1 mm ausgebildet sein kann. Die Außenseite der Leitungsdurchführung (das Leerrohr) sowie die Innenseite der Verteilermanschette bilden insbesondere im Falle einer im Wesentlichen präzisen konzentrischen Anordnung der Verteilermanschette um die Leitungsdurchführung herum einen ringförmig, insbesondere kreisringförmig, umlaufenden Ringraumspalt, dessen radiale Breite insbesondere kontinuierlich größer als 0,5 mm und kleiner als 5 mm oder 3 mm gebildet ist. Vorzugsweise ist der Ringraumspalt zwischen 1,5 mm und 2,5 mm, insbesondere bei etwa 1,5 mm, gebildet. Der Ringraumspalt kann sich mit konstantem Radialabstand zwischen der Verteilermanschette und der Leitungsdurchführung in Umfangsrichtung und in Axialrichtung erstrecken. Es zeigte sich überraschenderweise, dass dieser schmale Ringraumspalt dazu ausreicht, eine gute Verteilung der Aushärtsubstanz bereitzustellen. Auf diese Weise kann das Volumen des Leerrohrs maximiert werden, wobei die Dichtigkeit der Befestigung des Leerrohrs an dem Wanddurchgang optimiert ist.

Bei einer Weiterbildung der Erfindung kann der Außendurchmesser der Verteilermanschette größer als 10 mm und/oder ldeiner als 100 mm, vorzugsweise größer als 30 mm und kleiner als 70 mm definiert sein.

Bei einer Weiterbildung der Erfindung hat der Ringspaltraum, insbesondere bei einer präzisen konzentrischen Anordnung der Verteilermanschette um die Leitungsdurchführung herum, eine konstante radiale Breite längs der Erstreckung der Leitungsdurchführung, insbesondere bei Ausführung einer starren Verteilermanschette oder bei gleichmäßigem Innendruck der Verteilermanschette.

Bei einer Weiterbildung der Erfindung umfasst die Verteilermanschette ein insbesondere der Gebäudeinnenseite zugewandtes, hülsenförmiges Dichtende oder Dichtungsmuffe. Das Dichtungsende bildet vorzugsweise eine zylindrische Innendichtfläche, welche einen Innendurchmesser aufweist, der derart an einen insbesondere konstanten Außendurchmesser der Leitungsdurchführung, wie des Leerrohrs, angepasst ist, dass eine spielfreie Passung, insbesondere eine Übergangspassung oder Presspassung, zwischen der Leitungsdurchführung und der Verteilermanschette gebildet ist, insbesondere um eine Abdichtung gegenüber einem axialen Austritt der Aushärtsubstanz aus dem Ringspaltraum zu realisieren.

Des Weiteren betrifft die Erfindung die Verteilermanschette selbst, die insbesondere mit der oben genannten Befestigungs- und Abdichtvorrichtung eingesetzt werden kann. Die Verteilermanschette dient dazu, die Leitungsdurchführung, wie das Leerrohr, insbesondere konzentrisch zu umschließen und dabei den ringförmig, insbesondere kreisringförmig, umlaufenden Spaltraum zu bilden. In den Spaltraum soll die fließfähige Aushärtsubstanz eingebracht werden. Die Verteilermanschette hat einen starren oder flexiblen Hüllkörper mit mehreren Durchgangslöchern für ein radiales Passieren der Aushärtsubstanz von der Innenseite der Verteilermanschette hin zu deren Außenseite, um in Kontakt mit der Innenseite des Gebäudewanddurchgangs zu gelangen. Des Weiteren hat die Verteilermanschette insbesondere an einem axialen Endabschnitt einen Anlageflansch insbesondere zum Anlegen an einer Gebäudeseite, vorzugsweise einer Gebäudeaußenwand, um für die Montage der Verteilermanschette, insbesondere der Abdicht- und Befestigungsvorrichtung eine klare axiale und gegebenenfalls auch eine radiale Position dem Hüllkörper zu verleihen. Erfindungsgemäß hat der Anlageflansch einen Anschluss, über den die Aushärtsubstanz in den Spaltraum einzubringen ist. Der Anschluss kann dazu dienen, eine externe Aushärtsubstanzquelle anzuschließen. Dem Anschluss schließt ein Einlasskanal zum Leiten der insbesondere pastösen Aushärtsubstanz in den Spaltraum an. Erfindungsgemäß sind zumindest der Hüllkörper und der Anschluss mit der Kanalwandbegrenzung des Einlasskanals und gegebenenfalls der Anlageflansch aus einem Materialstück gefertigt, insbesondere aus einem Kunststoffstück gespritzt. Es zeigte sich, dass mit dieser technischen Maßnahme eine äußerst kompakte Verteilermanschette und eine kompakte Abdicht- und Befestigungsvorrichtung erreichbar ist und der Spaltraum mit einem deutlich geringeren Volumen ausgebildet werden kann. Auf diese Weise kann das Belegevolumen des Leerrohrs deutlich vergrößert werden. Es zeigte sich weiterhin, dass auch die Bedienbarkeit der Abdicht- und Befestigungsvorrichtung bei der Montage und bei dem Injizieren der Aushärtsubstanz deutlich vereinfacht ist, weil erfindungsgemäß eine Verletzung der separaten Leitungsstrukturen weitgehend ausgeschlossen wird.

Bei einer bevorzugten Ausführung der Erfindung hat der Einlasskanal einen anschlussseitigen Kanalendabschnitt, der sich von einem freien Anschlussende axial insbesondere im Wesentlichen bis auf axiale Höhe einer Anlagefläche des Anlageflansches oder der Gebäudeanlagefläche erstreckt und/oder im Wesentlichen einen zylindrischen Durchlassquerschnitt aufweist. Des Weiteren hat der Einlasskanal einen Übergangskanalabschnitt, der in Axialrichtung stufenartig an dem Kanalendabschnitt anschließt. Die radialen Außenbegrenzungswände des Übergangskanalabschnitts springen gegenüber den Außenbegrenzungswänden des Kanalendabschnitts radial nach innen zurück, wodurch eine Radialhöhe des Kanalquerschnitts verringert ist. Gleichzeitig wird der in Umfangswandrichtung begrenzende Wandabschnitt des Kanals verbreitert, um eine Querschnittsverringerung auszugleichen oder zumindest gering zu halten oder vollständig auszugleichen. Des Weiteren hat der Übergangskanalabschnitt eine radial-innenseitige Durchlassöffnung, über die eine Fluidverbindung zwischen dem Einlasskanal und dem Spaltraum erreicht wird.

Bei einer bevorzugten Ausführung der Erfindung hat der Anlageflansch einen Einlasskanal, der insbesondere anschlussseitig einen zylindrischen Kanalquerschnitt umfasst. Auf axialer Höhe einer Anlagefläche des Anlageflansches mündet der Einlasskanal in den rotationsunsymmetrischen Übergangskanalabschnitt, dessen radiale, äußere bzw. innere Begrenzungswand gegenüber dem zylindrischen Querschnitt radial nach innen bzw. außen insbesondere um einen vorzugsweise gleichen Radialversatz von wenigstens 1 mm zurückspringt, wodurch die Radialquerschnittshöhe des Übergangskanalabschnitts gegenüber dem Einlasskanal verringert ist. Die Außenwand des Kanalübergangsabschnitts ist gegenüber der Außenwand des sich in Längsrichtung erstreckenden Verteilungskanals, der an der Innenseite des Hüllkörpers durch den insbesondere zylindrischen Hüllkörper gebildet ist, radial nach außen geweitet, vorzugsweise um weniger als 3 mm, wobei die versetzte Außenwand sich um mehr als 10 mm in axialer Längsrichtung von der Anlagefläche ins Innere des Wanddurchgangs erstreckt und anschließend in den zylindrischen Hüllkörper mittels einer Stufe verschwindend mündet. Vorzugsweise ist die Wandstärke längs des gesamten Einlasskanals von dem Anschluss hin zum Spaltraum im Wesentlichen konstant. Des Weiteren kann eine Kanalinnenwandung des Kanalübergangsabschnitts insbesondere im Bereich der axialen Höhe der Anlagefläche mit einer Durchlassöffnung zur fluidalen Verbindung des Einlasskanals mit dem an dem Übergangskanal anschließenden Verteilungskanal versehen sein. Dabei kann die Durchlassöffnung sich um wenigstens 5 mm in Längsrichtung axial erstrecken, wobei sie eine geringere Umfangsbreite als axiale Länge aufweist.

Bei einer Weiterbildung der Erfindung ist ein oben (radial außen) liegender Kanalbegrenzungswandabschnitt des Hüllkörpers frei von jeglichen Durchgangslöchern und/oder - schlitzen. Der Kanalbegrenzungswandabschnitt ohne Durchgangslöcher kann eine Mindestumfangsbreite von wenigstens 5 mm aufweisen, wobei insbesondere sich der durchgangslochfreie Hüllkörperabschnitt in Längsrichtung um wenigstens die Hälfte der Längsausdehnung des Hüllkörpers erstreckt. Insbesondere in axialer Verlängerung des durchgangslochfreien Hüllkörperabschnitts schließt wenigstens eine Reihe von insbesondere identischen Durchgangslöchern und/oder -schlitzen an.

Des Weiteren betrifft die Erfindung eine schlauchartige, insbesondere membranartige, insbesondere manuell verformbare, flexible Verteilermanschette für die Vorrichtung zum Befestigen und Abdichten der durch einen Wanddurchgang einer durch die Gebäudewand führenden Leitungsdurchführung, wie sie beispielsweise auch oben definiert ist. Die Leitungsdurchführung kann ein Leerrohr sein, in dem die elektrischen Leiter oder Lichtwellenleiter anzuordnen sind. Die Befestigung der flexiblen Verteilermanschette soll an und gegenüber der Gebäudewand geschehen, wobei die flexible Verteilermanschette mit der Leitungsdurchführung, zu der sie konzentrisch angeordnet werden kann, einen ringförmig, insbesondere kreisringförmig, umlaufenden Spaltraum bildet. Erfindungsgemäß hat die Verteilermanschette mehrere Durchgangslanglöcher, die durch Schlitze mit einer Schlitzmindestbreite von wenigstens 0,3 mm, 0,4 mm oder 0,5 mm ausgebildet sind. Dabei sind die Schlitzlänge und die Schlitzbreite derart bemessen, dass im Montagezustand, insbesondere bei Aufbringen eines Aushärtsubstanzdrucks auf die Verteilermanschette die sich gegenüberliegenden Schlitzränder nicht in Kontakt kommen sondern derjenige Schlitz offenbleibt, um ein Durchlassen der Aushärtsubstanz zu gewährleisten. Der Injektionsdruck der Aushärtsubstanz in den Spaltraum muss nicht dazu aufgebracht werden, einen Durchlassquerschnitt in dem Schlitz bereitzustellen.

Vorzugsweise ist die flexible Verteilermanschette aus einem Stück Elastomermaterial gefertigt, insbesondere gespritzt. Zusätzlich und/oder alternativ ist wenigstens eine sich in axialer Längsrichtung der Verteilermanschette erstreckende Schlitzreihe mit in gleicher Schlitzausrichtung angeordneten Schlitzen, vorzugsweise gleicher Schlitzlänge und -breite vorgesehen. Insbesondere zwei zueinander benachbarte Schlitzreihen können jeweils eine zueinander unterschiedliche Schlitzlänge aufweisen, wobei insbesondere ein Längenunterschied von wenigstens 5 mm, 1 cm oder 2 cm besteht, wobei insbesondere die Schlitzbreite der Schlitze beider Schlitzreihen, insbesondere aller Schlitzreihen, im Wesentlichen gleich groß ist.

Bei einer bevorzugten Ausführung der Erfindung sind die Schlitze bereits im Rahmen der Fertigung der flexiblen Verteilermanschette realisiert, beispielsweise durch ein entsprechendes Spritzgussverfahren.

Vorzugsweise erstrecken sich die Schlitze insbesondere konstanter Schlitzbreite bei gleicher Axialposition ausschließlich in Umfangsrichtung der Verteilermanschette. Dabei können die in dem Hüllkörper eingebrachten Schlitze eine Langlochform insbesondere mit parallelen Langlochrändern und/oder abgerundeten Lochenden aufweisen.

Schließlich betrifft die Erfindung eine starre Verteilermanschette, insbesondere aus einem starren Material, wie Metall oder Kunststoff, für eine insbesondere oben beschriebene Vorrichtung zum Befestigen und Abdichten einer durch den Wanddurchgang der Gebäudewand führenden Leitungsdurchführung, wie eines Leerrohrs, an und gegenüber der Gebäudewand und zum Umschließen der Leitungsdurchführung unter Ausbildung eines ringförmig, insbesondere kreisringförmig, umgebenden Spaltraums. In den Spaltraum ist eine fließfähige Aushärtsubstanz einbringbar, welche die abschließende Dichtungsfunktion und Befestigungsfunktion realisiert.

Die starre Verteilermanschette umfasst einen Hüllkörper mit mehreren Durchlassöffnungen, über die die Aushärtsubstanz aus dem Spaltraum hin zu dem Wanddurchgang austreten kann. Erfindungsgemäß weisen die Durchlassöffnungen jeweils eine Langlochform auf, wobei deren insbesondere in Langlochlängsverlauf konstante Durchlassbreite kleiner als 1 mm und größer als 3 mm ist, vorzugsweise zwischen 0,4 mm und 0,8 mm liegt. Gerade bei einer starren Verteilermanschette erwies sich diese Langlochgröße als insofern vorteilhaft, als eine ausreichende Durchlassquantität durch die Durchlässe realisierbar ist, ohne die Stabilität des Hüllkörpers zu stark zu beeinträchtigen. Des Weiteren gewährleistet eine gleichmäßige Verteilung der oben dimensionierten Langlöcher eine großvolumige Verteilung der Aushärtsubstanz, wodurch einerseits ein verbesserter Abdichtungseffekt und ein stärkerer Befestigungswiderstand erzeugt werden kann.

Bei einer Weiterbildung der Erfindung ist ein Flächenverhältnis zwischen einem Gesamtdurchlassquerschnitt der Durchlassöffnungen, der sich aus der Summe sämtlicher Durchlassquerschnitte der Durchlassöffnung in dem Hüllkörper ergibt, und dem Gesamtaußenumfang des insbesondere zylindrischen Hüllkörper größer als 0,5 und kleiner als 0,7, vorzugsweise zwischen 0,52 und 0,6, insbesondere zwischen 0,55 und 0,65.

Bei einer Weiterbildung der Erfindung hat die Verteilermanschette wenigstens vier, fünf oder sechs Reihen identischer Durchlasslanglöcher, wobei die Reihen mit gleichmäßigem Abstand zueinander am Umfang verteilt angeordnet sind. Es sei klar, dass im Bereich des den Verteilungskanal radial außen begrenzenden Abschnitts des Hüllkörpers vorzugsweise teilweise keine Langlöcher angeordnet sind.

Vorzugsweise besitzt eine erste Durchlasslanglochreihe eine Kurzlochlänge von weniger als 4 mm und eine weitere mit einer Großlanglochlänge von mehr als 4 mm oder 5 mm. Der Hüllkörper hat einen durchlasslanglochfreien Brückenbereich, der eine Breite von wenigstens 4 mm, 5 mm oder 6 mm aufweist. Der durchlasslanglochfreie Bereich erstreckt sich um wenigstens die Hälfte der Gesamtlänge des Hüllkörpers, insbesondere hat die gleiche Länge wie der innenseitige Verteilungskanal.

Bei einer bevorzugten Ausführung der Erfindung ist die Abdicht- und Befestigungsvorrichtung mit einer oben genannten Manschette je nach Ausführung ausgebildet.

Des Weiteren betrifft die Erfindung ein Verfahren zum Befestigen und Abdichten einer durch einen Wanddurchgang einer Gebäudewand führenden Leitungsdurchführung, wie eines Leerrohres, an und gegenüber der Gebäudewand, wobei insbesondere die oben genannte Vorrichtung und/oder die oben genannten Verteilermanschetten eingesetzt werden.

Insbesondere betrifft die Erfindung ein durch einen Wanddurchgang einer Gebäudewand führenden Leitungsdurchführung, wie eines Leerrohres, an und gegenüber der Gebäudewand. Bei dem Verfahren wird eine Verteilermanschette derart dimensioniert, dass insbesondere bei konzentrischer Anordnung der Verteilermanschette um die Leitungsdurchführung herum ein kreisringförmiger Spaltraum gebildet wird, dessen radiale Breite insbesondere größer als 0,5 mm und insbesondere kleiner als 5 mm gebildet ist.

Vorzugsweise betrifft die Erfindung ein Verfahren, bei dem ein mit der Verteilermanschette insbesondere einstückig gefertigter Anlageflansch an einer Gebäudewandseite, insbesondere an einer Gebäudeaußenwandseite angebracht, insbesondere verspannt wird. Dabei wird insbesondere an dem Anlageflansch eine Aushärtsubstanz, wie Tangit, eingespritzt, um die Leitungsdurchführung an dem Wanddurchgang zu befestigen.

Weitere Aspekte sind in den Unteransprüchen angegeben.

Weitere Merkmale, Vorteile und Eigenschaften der Erfindung werden durch die folgende Beschreibung einer bevorzugten Ausführung der vorliegenden Erfindung anhand der beiliegenden Zeichnungen deutlich, in denen zeigen:
- Fig. 1: eine perspektivische Ansicht einer erfindungsgemäßen Befestigungs- und Abdichtvorrichtung für einen Wanddurchgang in Kombination mit einer Spanneinrichtung;
- Fig. 2: eine Querschnittsansicht der Anordnung gemäß Fig. 1;

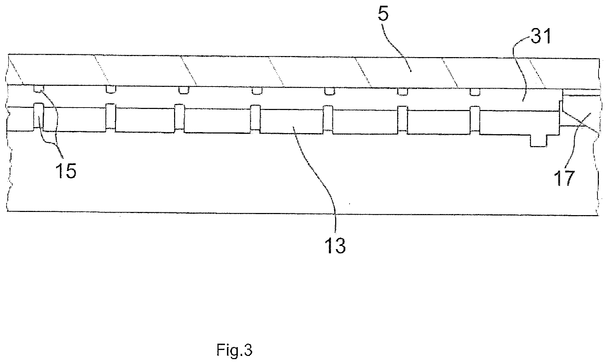

- Fig. 3: eine Längsquerschnittsansicht gemäß Abschnitt III nach Fig. 2;
- Fig. 4: einen Querschnitt einer erfindungsgemäßen Durchlasshülse;
- Fig. 5: eine Detailquerschnittsansicht gemäß Abschnitt V nach Fig. 4;

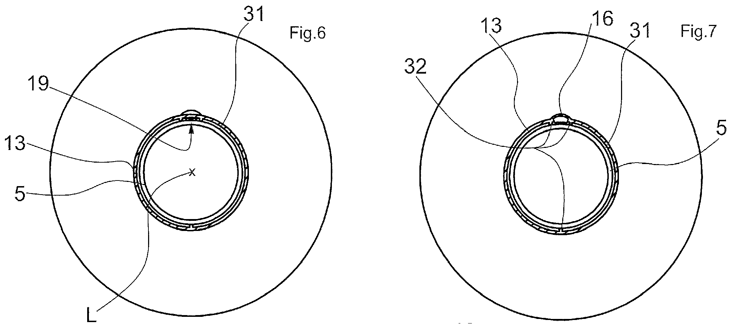

- Fig. 6: eine Querschnittsansicht entlang der Schnittlinie VI-VI nach Fig. 4;
- Fig. 7: eine Querschnittsansicht entlang der Schnittlinie VII-VII nach Fig. 4;
- Fig. 8: eine Querschnittsansicht entlang der Schnittlinie VIII-VIII gemäß Fig. 4;
- Fig. 9: eine Querschnittsansicht entlang der Schnittlinie IX-IX gemäß Fig. 4;
- Fig. 10: eine Seitenansicht der erfindungsgemäßen Befestigungs- und Abdichtvorrichtung; und
- Fig. 11: eine Detailseitenansicht gemäß Abschnitt XI nach Fig. 10.

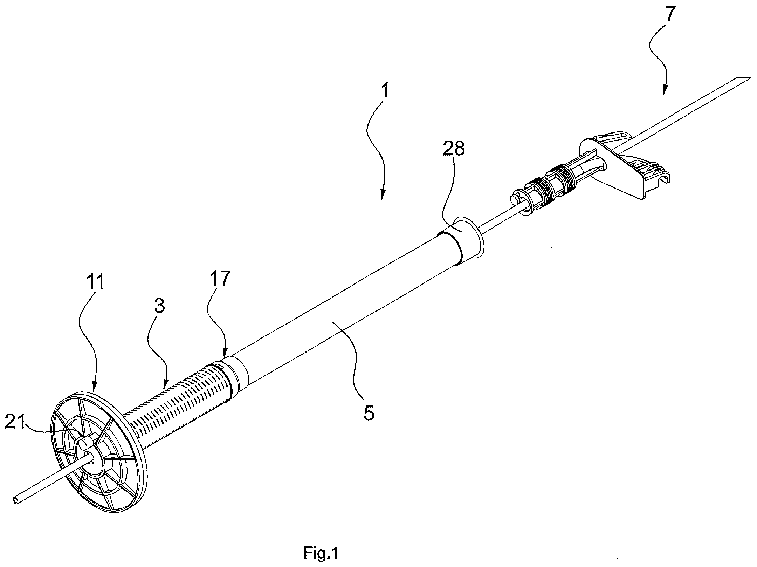

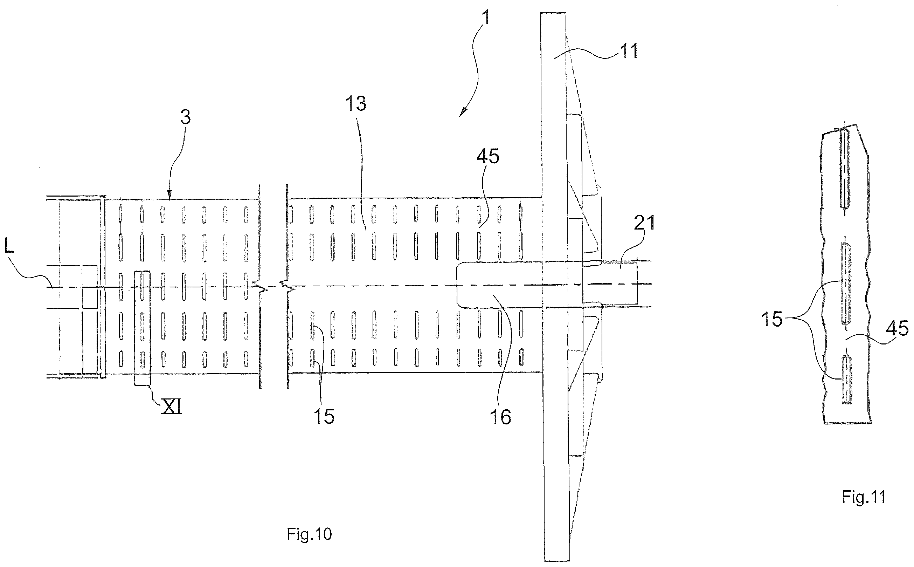

In Fig. 1 ist die erfindungsgemäße Abdicht- und Befestigungsvorrichtung für eine durch einen Wanddurchgang (nicht näher dargestellt) einer Gebäudewand (nicht näher dargestellt) führenden Leitungsdurchführung oder Wanddurchgang mit der Bezugsziffer 1 versehen. Die Abdichtungs- und Befestigungsvorrichtung 1 umfasst im Wesentlichen als Hauptbestandteile: eine Verteilermanschette 3, die beispielsweise als starre Durchlasshülse mit radialen Durchlasslöchern oder als gegenüber der starren rohrartigen Durchlasshülse flexibel verformbarer und formanpassbarer Durchlassschlauch mit radialen Durchlasslöchern ausgebildet sein kann (die Verteilermanschette 3 kann auch als Injektionshülse oder Siebhülse bezeichnet werden); und ein Leerrohr 5, das beispielsweise einen Standarddurchmesser von 32 cm (Fig. 10) oder 50 cm (Fig. 11) aufweisen kann und durch den gesamten Wanddurchgang von einer Außenseite A zu einer Innenseite I der Gebäudewand reicht. Die Verteilermanschette 3 definiert einen Hüllkörper 13, der die Außenseite des Leerrohrs 5 insbesondere benachbart der Gebäudeaußenseite A vollständig in Umfangsrichtung außen umgibt. Durchlassöffnungen in dem Hüllkörper 13 stellen eine direkte Radialverbindung von der Außenseite des Leerrohrs 5 zur Außenseite des Hüllkörpers 13 bereit. Der Hüllkörper 13 hat eine bestimmte Längsausdehnung (längs der Längsachse L) und soll mindestens ein Viertel der Gesamterstreckung des Wanddurchgangs, allerdings höchstens die Hälfte oder zwei Drittel der axialen Gesamtlänge des Wanddurchgangs aufweisen. Nur ein endnaher Abschnitt 9 des Leerrohrs 5 ist von der Verteilermanschette 3 unter Ausbildung eines umlaufenden ringförmigen Spaltraums 31 vollständig umschlossen.

Des Weiteren umfasst die Abdichtungs- und Befestigungsvorrichtung 1 eine Abdicht- und Spannvorrichtung 7, welche an einem der Gebäudeinnenwand I zugewandten Ende des Leerrohrs 5 eingesetzt werden kann, so dass die Spannvorrichtung 7 in Kooperation mit einem am gegenüberliegenden Ende angeordneten Anlageflansch 11 das Leerrohr 5 im Montagezustand insbesondere auf Zug verspannt. Die Abdicht- und Spannvorrichtung 7 ist näher in der bereits veröffentlichten Patentanmeldung DE 10 2010 026 082 A1 erläutert, deren Inhalt insbesondere bezüglich der Funktionsweise und Anordnung der Abdicht- und Spannvorrichtung 7 als weitere Offenbarung zu berücksichtigen ist.

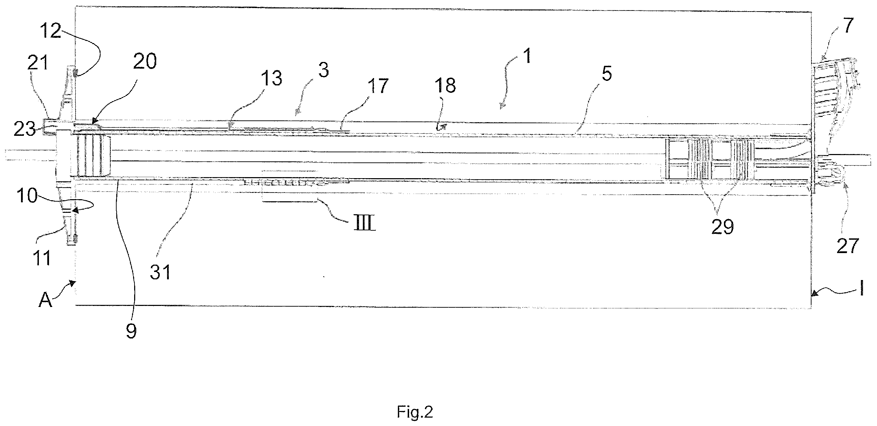

In Fig. 2 ist die erfindungsgemäße Vorrichtung 1 zum Befestigen und Abdichten des Leerrohrs 5 im Querschnitt dargestellt, wobei die Spann- und Abdichtvorrichtung 7 in dem Leerrohr 5 montiert ist. Durch das Umlegen eines Griffelements 27 der Spannabdichtung 7 schiebt sich ein Mitnehmer in axialer Richtung, wodurch zwei Abdichtwülste 29 axial zusammengedrückt werden und sich radial weiten, um einen umschließenden Dichtungskontakt mit der Innenseite des Leerrohrs 5 zu bilden.

Der Hüllkörper 13 umfasst eine Vielzahl von im Wesentlichen gleichmäßig verteilten Durchlasslanglöchern 15, die in mehreren axialen Reihen hintereinander im Wesentlichen im gleichen Axialabstand angeordnet sind. Auf die Anordnung der Durchgangslanglöcher 15 wird später insbesondere unter Bezugnahme auf Fig. 10 und 11 eingegangen.

An einem von der Gebäudeaußenwand A abgewandten Ende des Hüllkörpers 13 ist eine Dichtungsmuffe 17 einstückig an dem Hüllkörper 13 angeschlossen, welche einen passgenauen Innenumfang bezüglich der Außenabmessung des Leerrohrs 5 oder einen geringfügig kleineren Innenumfang aufweist, um eine Abdichtung in axialer Richtung zwischen dem Hüllkörper 13 und dem Leerrohr 5 bereitzustellen. Zwischen der Innenseite des Hüllkörpers 13 und der Außenseite des Leerrohrs 5 ist der koaxiale, im Wesentlichen ringförmig, insbesondere kreisringförmig, umlaufende Spaltraum 31 gebildet, der an der Dichtungsmuffe 17 endet. Die Form des Spaltraums 31 hängt auch von der Steifigkeit der Verteilermanschette 3 und dem Injektionsdruck ab, mit dem eine pastöse Befestigungsmasse in den Spaltraum 31 eingebracht werden soll. Im Falle eines membranartigen Durchlassschlauchs als Verteilermanschette 3 ist von einem nicht kontinuierlich umlaufenden Spaltraum 31 auszugehen, während sich der Spaltraum 31 bei einer Durchlasshülse aus starrem Material mit konstanter Radialbreite oder bei einem gleichmäßigen Spaltrauminnendruck 31 gleichbleibend in Umfangs- und Axialrichtung L erstreckt.

Um bei Ausbildung einer insbesondere flexiblen Verteilermanschette 3 um das Leerrohr 5 können von dem Hüllkörper 13 radial nach innen vorspringende Abstandsrippen vorgesehen sein, die sich in axialer Längsrichtung L erstrecken und an dem Leerrohr aufliegen, um eine Beabstandung und koaxiale Zentrierung der Innenseite des Hüllkörpers auf der Außenseite des Leerrohrs 5 anliegend zu gewährleisten und damit eine möglichst gleichmäßige Spaltraumbildung.

Auf der der Gebäudeaußenwand A zugewandten Seite des Hüllkörpers 13 schließt einstückig der Anlageflansch 11 an, der scheibenförmig geformt ist und eine der Gebäudeaußenwand A zugewandte ebene Anlagefläche 10 aufweist, die mit einem Dichtungsband 12, wie einem Butylband, versehen ist, um einen fluiddichtenden Abschluss bei der Anlage an der Gebäudeaußenwand A zu bilden.

Auf der von der Gebäudeaußenwand A abgewandten Seite des Anlageflansch 11 ist ein einstückig mit dem Anlageflansch 11 ausgebildeter Anschluss- oder Injektionsstutzen 21 ausgebildet, der einen Kanalendabschnitt 22 oder Einlasskanal insbesondere kreiszylindrischen Querschnitts bildet, der mit dem an der Innenseite des Hüllkörpers ausgebildeten Verteilungskanal 19 zum Weiterleiten der Aushärtsubstanz über die Mitte des Hüllkörpers 13 hinaus verbunden ist. Der Injektionsstutzen 21 bildet den kreiszylindrischen Anschluss zum einfachen Anschließen eines Injektionsschlauchs oder anderem Befüllungshilfsmittel (nicht dargestellt), und hat einen Innendurchmesser von 5 mm bis 20 mm, insbesondere etwa 10 mm. Über den Injektionsstutzen 21 wird eine pastöse, fließflähige Aushärtsubstanz, wie Tangit, in den Spaltraum 31 eingebracht, wobei die Aushärtsubstanz sich nach einer Aushärtzeit verfestigt, um eine starre Kopplung zwischen dem innenliegenden Leerrohr 5 und der Innenseite des gebohrten Wanddurchgangs zu erreichen. Der Anschlussstutzen 21 ist exzentrisch zur Längsachse L der Verteilermanschette 3 im Wesentlichen auf einer radialen Höhe r des zylindrischen Hüllkörpers 13 angeordnet, die im Wesentlichen dem maximalen Radialabstand der Verteilermanschette 3 entspricht, insbesondere geringfügig größer als der maximale Radialabstand des Außenumfangs des Leerrohrs 5 zur Längsachse L und etwa geringfügig kleiner als der Radialabstand der Innenseite des Wanddurchgangs 18 zur Längsachse L ist. Der Anschlussstutzen 21 bildet den außenseitigen Einlasskanal für den daran über einen Übergangskanalabschnitt anschließenden, sich parallel zur Längsachse L erstreckenden Verteilungskanals 19, der im Inneren des Hüllkörpers 13 angesiedelt ist und sich längs über die Hälfte der axialen Länge der Verteilermanschette 3 an deren Innenseite erstreckt. Der Verteilungskanal 19 ist eine von dem Hüllkörper 13 teilweise begrenzte Kanalstruktur, welche zum Leerrohr 5 hin offen ist und auch von diesem radial begrenzt wird. Der Verteilungskanal 19 ist durch zwei in Längsrichtung L erstreckende Langrippen 32 in Umfangsrichtung begrenzt, die einstückig mit dem Hüllkörper 13 ausgebildet sind und im Wesentlichen dichtend an dem Leerrohr 5 aufliegen und damit ein seitliches Umfangsausströmen aus dem Verteilungskanal 19 verhindern, so dass die pastöse Aushärtsubstanz aufgrund des Injektionsdrucks ausschließlich längs des Verteilungskanals 19 strömen soll. Die Langrippen 32 sind in Umfangsrichtung voneinander um in etwa 3° bis 50° versetzt und verlaufen parallel zueinander. Die Langrippen 32 enden nach etwa der Hälfte der Gesamtaxialausdehnung der Verteilermanschette 3, wo auch der Verteilungskanal 19 endet, so dass sich die dort austretende Aushärtsubstanz in Umfangs-, Radial- und Axialrichtung frei ausbreiten kann. Lediglich ein Ausweichen durch die Durchgangslanglöcher 15 ist möglich, um eine pastöse Verbindung zwischen dem Leerrohr 5 und der Innenseite des Wanddurchgangs bereitzustellen. Im montierten Zustand der Verteilermanschette 3 auf dem Leerrohr 5 können die sich in Längsrichtung L erstreckenden Rippenränder formschlüssig an der Außenseite des Leerrohrs 5 anliegen. Die Rippenränder können entsprechend dem Krümmungsradius der Außenseite des Leerrohrs geformt sein. Die Innenseite der radialen Aufweitung 16 am Anfangsbereich des Verteilungskanals 19 sowie im Anschluss die Innenseite des unaufgeweiteten Hüllkörpers 13 sowie die Langrippen 32 und der entsprechende Bereich der Außenseite des Leerrohrs 5 begrenzen den Verteilungskanal 19.

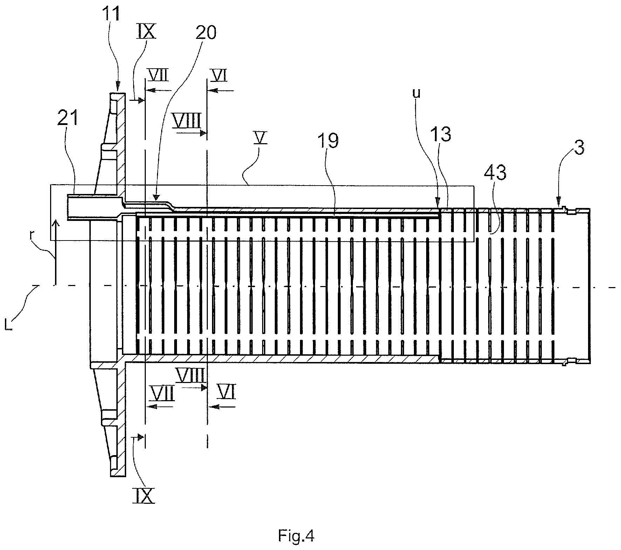

Wie in Fig. 4 ersichtlich ist, erstreckt sich der Verteilungskanal 19 axial nicht über die gesamte Längserstreckung des Hüllkörpers 13 sondern über wenigstens die Hälfte aber weniger als ein Dreiviertel der Gesamtlängserstreckung des Hüllkörpers 13. Der Verteilungskanal 19 endet mit dem Zurückspringen der Langrippen 32 zur Innenseite des zylindrischen Hüllkörpers 13. Diese Austrittsstelle ist mit dem Bezugszeichen u versehen. Der Verteilungskanal 19 ist im Querschnitt teilringabschnittsförmig und ändert seinen Querschnitt im Bereich der domförmigen Aufweitung 16, die im axialen Anschluss an den Anlageflansch 11 ausgebildet ist. Der Verteilungskanal 19 ist radial außen von dem entsprechend zugeordneten zylindrischen Teilabschnitt des Hüllkörpers 13 begrenzt. Dem Paar Langrippen 32 im Wesentlichen diametral zur Längsachse L gegenüberliegend ist eine zusätzliche Stabilisationsrippe 33 zugeordnet, die zur Stabilisierung/Zentrierung des Hüllkörpers 13 an dem Leerrohr 5 vorgesehen sind. Die Langrippen 32 und die Stabilisationsrippe 33 sind einstückig mit dem Hüllkörper 13 insbesondere aus Kunststoff gefertigt. Die Stabilisationsrippe 33 erstreckt sich in Axialrichtung genauso weit wie die Langrippen 32, um ein ungehindertes Verteilen der Aushärtsubstanz im rippenfreien Endbereich der Verteilermanschette 3 zu erreichen.

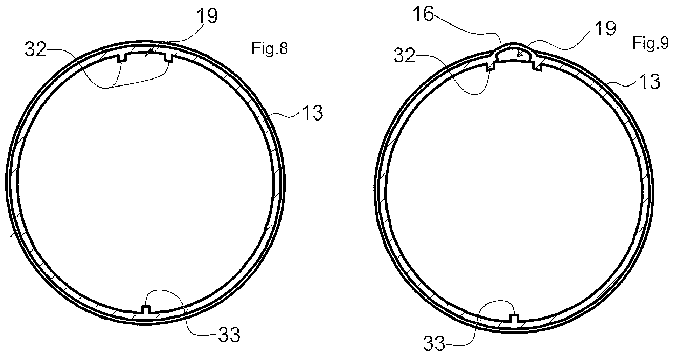

Benachbart der Gebäudeaußenwandseite A einige Millimeter in den Wanddurchgang hineinragend ist die radiale Aufweitung 16 des Hüllkörpers 13 am Außenbereich eines den Verteilungskanal 19 mit dem Einlasskanal verbindenden Übergangskanalabschnitt ausgebildet. Die Aufweitung 16 sowie der radiale Außenbegrenzungsbereich des Verteilungskanals 19 im axialen Anschluss an die Aufweitung 16 sollen gemäß einer bevorzugten Ausführung der Erfindung frei von jeglicher Durchlassöffnung gebildet sein, so dass gewährleistet wird, dass die Menge der injizierten Aushärtsubstanz verlustfrei den Austrittsbereich u des Verteilungskanals 19 erreicht. Bezüglich der radial außenliegenden Injektionsstutzenhälfte des Injektionsstutzens 21 bildet ein Übergangskanalabschnitt 20 trotz der Aufweitung 16 einen radialen Rücksprung. Die Aufweitung 16 dient dazu, von dem zylindrischen Einlassquerschnitt des Injektionsstutzens 21 hin zu dem ringabschnittsförmigen Verteilungskanal 19 (Fig. 8) eine stufenweise Querschnittsveränderung hin zum Verteilungskanal 19 zu schaffen. Im Bereich der Aufweitung 16 im Übergangskanalabschnitt 20 zu dem ringabschnittsförmigen Verteilungskanal 19 ist der Durchlassquerschnitt des Verteilungskanals 19 durch die umfangsseitigen Langrippen 32 und in einen gegenüber dem zylindrischen Injektionsstutzen 21 ovalen Querschnitt verändert. Der ovale Querschnitt im Kanalübergang 20 ist gegenüber dem Kanalendabschnitt 22 des Injektionsstutzens 21 radial gestaucht und in Umfangsrichtung geweitet.

Im Bereich des Kanalübergangsabschnitts 20 ist ein radial innenliegender, axialer Stutzenfortsatz 25 des Injektionsstutzens 21 vorgesehen, der radial innenseitig gegenüber dem Innenkanalendabschnit des Injektionsstutzens 21 radial vorspringt und sich über die Anlagefläche 10 hinaus axial nach innen in den Wanddurchgang 18 erstreckt. An dem axialen Ende des Stutzenfortsatzes 25 ist die innenliegende Durchlassöffnung 26 gebildet, um den Kanal innen hin zum Leerrohr 5 zu öffnen und die Kanalstruktur mit dem Verteilungskanal 19 zu verbinden.

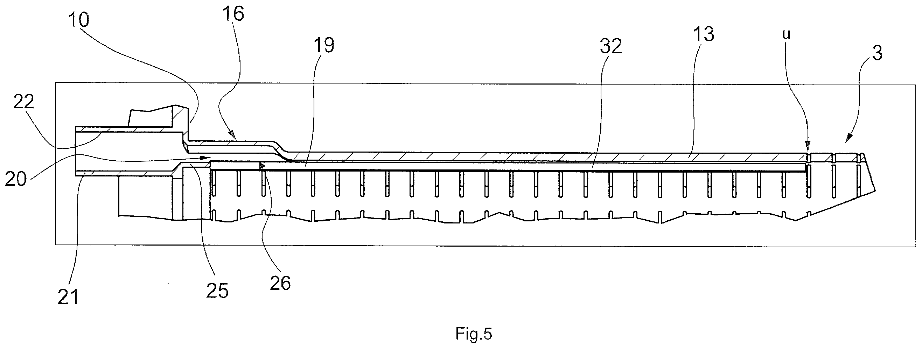

Wie insbesondere in Fig. 5 ersichtlich ist, ist der Durchgangsquerschnitt des Injektionsstutzens im Wesentlichen bis zur Anlagefläche 10 kreisflächig, wobei im Bereich des Übergangskanalabschnitts 20, welcher die Aufweitung 16 umfasst, eine sprungartige Querschnittsreduzierung vorgesehen ist. Der Übergangskanalabschnitt 20 erstreckt sich über die Position der Anlagefläche 10 axial in den Wanddurchgang 18 hinein, wobei axial anfänglich innenseitig der Übergangskanalabschnitt 20 durch den Stutzenfortsatz 25 begrenzt ist. Mehrere Millimeter, insbesondere 5 mm bis 15 mm ab der Verringerung des Durchgangsquerschnitts endet der Stutzenfortsatz 25 und mündet in die innenseitige Durchlassöffnung 26. Außenseitig und in Umfangsrichtung ist der Übergangskanalabschnitt 20 durch die Aufweitung 16 sowie durch die Langrippen 32 begrenzt.

Der Verteilungskanal 19 erlaubt ein Austreten in Umfangsrichtung erst ab der Stelle u, so dass in den gesamten Spaltraum 31 ab der Außenstelle u ein pastöses Aushärtmaterial gelangt, das über den Injektionsstutzen 21 eingebracht werden kann. Von der Stelle u verteilt sich die Aushärtsubstanz in Umfangsrichtung, Radialrichtung und Axialrichtung gleichmäßig sowohl in den Spaltraum 31 als auch in Richtung der Gebäudeaußenwandseite A. Der Injektionsstutzen 21, der Anlageflansch 11 sowie die Hüllkörper 13 sowie die die Verteilungskanäle 19 begrenzenden Langrippen 32 sind aus einem Kunststoffstück gespritzt.

An dem der Gebäudeinnenwand zugewandten Ende des Leerrohrs 5 ist ein Zentrierring 28 aufgestülpt, der eine Zentrierung des Leerrohrs 5 in dem Wanddurchgang benachbart der Wandinnenseite bewerkstelligen soll.

In dem Hüllkörper 13 sind mehrere Reihen Durchlasslanglöcher 15 eingebracht, um ein radiales Austreten der fließfähigen Aushärtsubstanz (nicht näher dargestellt) von dem über den Injektionsstutzen 21 befüllten Spaltraum 31 in radialer Richtung hin zur Außenseite des Hüllkörpers 13 und hin zur Innenseite des Wanddurchgangs 18 bereitzustellen. Die Langlocherstreckung der Durchgangslöcher 15 ist in Umfangsrichtung, also senkrecht zur Längsachse L, ausgerichtet, wobei die Umfangslänge der Durchgangslanglöcher 15 für jede Reihe unterschiedlich sein kann.

Für jede axiale Reihe von Durchgangslanglöchern 15 kann die Umfangslänge der Durchgangslanglöcher 15 konstant sein. Die Durchlasslanglöcher 15 sind bei allen Reihen in einem gleichen Axialabstand zueinander angeordnet. Die Axialreihen der Durchgangslanglöcher 15 sind über einen kontinuierlichen Brückenabschnitt 45 des Hüllkörpers (13) von 1 mm bis 5 mm getrennt, wobei jeder Brückenabschnitt 15 zwei in Umfangsrichtung benachbarte Durchgangslanglöcher 15 voneinander trennt.

Die Verteilermanschette 3 ist am gesamten Umfang mit den Durchgangslanglöchern versehen, die derart dimensioniert ist, dass ein ausreichendes Auftreten der Aushärtsubstanz aus dem Spaltraum 31 hin zur Innenseite des Wanddurchgangs 18 gewährleistet ist. Nur in Umfangs- und Längserstreckung des Verteilungskanals 19 sind keine Durchgänge in dem Hüllkörper 13 ausgebildet.

Wie in Fig. 4 ersichtlich ist, ist der Hohlraum 31 und die Durchgangsöffnung 15 in den Injektionshülsenkörper 13 bereits unmittelbar im axialen Anschluss an den Anlageflansch 11 ausgebildet, so dass auch der Feuchtigkeitseintrittsbereich an der Außenseite A der Gebäudewand unmittelbar mit der fließfähigen Aushärtsubstanz, insbesondere Tangit, abgedichtet wird.

Wie in Fig. 10 und 11 ersichtlich ist, sind die Durchlasslanglöcher 15 jeweils in einer Reihe angeordnet, wobei die Durchlasslanglöcher 15 jeder Reihe die gleiche Länge oder Umfangsausdehnung aufweisen. Benachbart dem Verteilungskanal 19 sind jeweils eine Reihe Langlochreihen mit einer ersten Länge, insbesondere von 6 mm angeordnet, wobei die dazu benachbarte Langlochreihe eine zweite Länge insbesondere von 3,5 mm aufweisen kann.

Die Durchgangslanglöcher 15 sind entweder in einem flexibel verformbaren Hüllkörper 13 eingebracht oder in einem starren Hülsenkörper 13. Bei den Ausführungen sind die Langlöcher mit einer Breite von größer als 0,3 mm und kleiner als 1 mm, vorzugsweise zwischen 0,4 mm und 0,8 mm, ausgebildet. Die Durchgangslanglöcher 15 entstehen im Rahmen des Fertigungsprozesses, insbesondere des Spritzgussprozesses des Hüllkörpers 13 und können derart dimensionspräzise ausgearbeitet werden, dass eine Nachbearbeitung der Durchgangslanglöcher 15 nicht notwendig ist. Es sei klar, dass insbesondere bei einem starren Material für den Hüllkörper 13 ein Materialwegnahmeverfahren, wie Stanzen oder Sägen, eingesetzt werden kann. Die Durchgangslanglöcher 15 sind insbesondere derart breit ausgebildet, dass sich die gegenüberliegenden Langlochseiten im montierten Zustand nicht berühren, sondern die Durchgangslanglochöffnung stets offen bleibt, auch wenn keine Aushärtsubstanz eingebracht ist. Der flexible, schlauchartige Hüllenkörper 13 kann aus einem gummielastischen Material gebildet sein und eine Wandstärke von weniger als 1 mm aufweisen. Der Hüllenkörper 13 kann auch durch ein starres Material, insbesondere ein Kunststoffmaterial, vorzugsweise ein Duroplastmaterial oder ein Thermoplastmaterial, gebildet sein und eine Wandstärke von mehr als 2 mm aufweisen.

Wie in Fig. 11 ersichtlich ist, sind derart viele Durchgangslöcher in dem Hüllenkörper 13 eingebracht, dass mehr als 50 % der Umfangsfläche frei von Durchlässen gebildet ist. Vorzugsweise liegt der durchlassfreie Flächenanteil zwischen 50 % und 70 %, insbesondere bei einer Injektionshülse von 32 cm bei 50 % bis 60 % und bei einer Injektionshülse von 50 cm zwischen 60 % und 70 %.

### Bezugszeichenliste

- 1: Abdichtungs- und Befestigungsvorrichtung
- 3: Verteilermanschette
- 5: Leerrohr
- 7: Abdicht- und Spannvorrichtung
- 9: endnaher Abschnitt
- 10: Anlagefläche
- 11: Anlageflansch
- 12: Dichtungsband
- 13: Hüllkörper
- 15: Durchlasslangloch
- 16: radiale Aufweitung
- 17: Dichtungsmuffe
- 18: Wanddurchgang
- 19: Verteilungskanal
- 20: Übergangskanalabschnitt
- 21: Injektionsstutzen
- 22: Kanalendabschnitt
- 25: Stutzenfortsatz
- 26: Durchlassöffnung
- 27: Griffelement
- 28: Zentrierring
- 29: Abdichtwulst
- 31: Spaltraum
- 32: Langrippen
- 33: Stabilisationsrippen
- 41: Durchlassöffnung
- 43, 45: Brückenabschnitt

- A: Gebäudeaußenwandseite
- I: Gebäudeinnenwandseite
- L: Längsachse
- r: radiale Höhe
- u: Verteilungskanalende/Austrittsende

## Patentansprüche

1. Vorrichtung (1) zum Befestigen und Abdichten einer durch einen Wanddurchgang (18) einer Gebäudewand führenden Leitungsdurchführung, wie eines Leerrohrs (5), an und gegenüber der Gebäudewand, umfassend die Leitungsdurchführung, eine die Leitungsdurchführung umgebende Verteilermanschette (3), die einen Hüllkörper (13) mit mehreren Durchgangsschlitzen oder Durchgangslöchern (15) für ein radiales Passieren einer Aushärtsubstanz von einer Innenseite der Verteilermanschette (3) hin zu dessen Außenseite aufweist, und einen sich zwischen einer Außenseite der Leitungsdurchführung und einer Innenseite der Verteilermanschette (3) bildenden ringförmig umlaufenden Ringspaltraum (31), dessen radiale Breite größer als 0,5 mm und kleiner als 5 mm gebildet ist, wobei ein sich in axialer Längsrichtung der Verteilermanschette (3) erstreckender Verteilungskanal (19) an einer Innenseite des Hüllkörpers (13) zum Weiterleiten der Aushärtsubstanz gebildet ist.

2. Vorrichtung (1) nach Anspruch 1, **dadurch gekennzeichnet, dass** sich der Verteilungskanal (19) von einem Einlasskanal (22) über einen daran anschließenden Übergangskanalabschnitt (20) längs über die Hälfte der axialen Länge der Verteilermanschette (3) an deren Innenseite erstreckt.

3. Vorrichtung (1) nach Anspruch 1 oder 2, **dadurch gekennzeichnet, dass** der Verteilungskanal (19) als eine von dem Hüllkörper (13) teilweise begrenzte Kanalstruktur gebildet ist, welche zum Leerrohr (5) hin offen ist und auch von diesem radial begrenzt ist.

4. Vorrichtung (1) nach einem der Ansprüche 1 bis 3, **dadurch gekennzeichnet, dass** der Verteilungskanal (19) durch zwei in Längsrichtung L erstreckende Langrippen (32) in Umfangsrichtung begrenzt ist, die einstückig mit dem Hüllkörper (13) ausgebildet sind und im Wesentlichen dichtend an dem Leerrohr (5) aufliegen und damit ein seitliches Umfangsausströmen aus dem der Verteilungskanal (19) verhindern, so dass insbesondere die pastöse Aushärtsubstanz aufgrund des Injektionsdrucks ausschließlich längs des Verteilungskanals (19) strömt.

5. Vorrichtung (1) nach Anspruch 4, **dadurch gekennzeichnet, dass** die Langrippen (32) nach etwa der Hälfte der Gesamtaxialausdehnung der Verteilermanschette (3) enden, wo auch der Verteilungskanal (19) endet, so dass sich die dort austretende Aushärtsubstanz in Umfangs-, Radial- und Axialrichtung frei ausbreiten kann.

6. Vorrichtung (1) nach einem der vorstehenden Ansprüche, **dadurch gekennzeichnet, dass** sich der der Verteilungskanal (19) axial nicht über die gesamte Längserstreckung des Hüllkörpers (13) erstreckt, sondern über wenigstens die Hälfte aber weniger als Dreiviertel der Gesamtlängserstreckung des Hüllkörpers (13).

7. Vorrichtung (1) nach einem der vorstehenden Ansprüche 4 oder 5, **dadurch gekennzeichnet, dass** der Verteilungskanal (19) mit dem Zurückspringen der Langrippen (32) zur Innenseite des zylindrischen Hüllkörpers (13) an einer Austrittsstelle u endet.

8. Vorrichtung (1) nach Anspruch 7, **dadurch gekennzeichnet, dass** der der Verteilungskanal (19) ein Austreten in Umfangsrichtung erst ab der Austrittsstelle u erlaubt, so dass in den gesamten Spaltraum (31) ab der Austrittsstelle u eine pastöse Aushärtsubstanz gelangt, die über einen Injektionsstutzen (21) eingebracht werden kann.

9. Vorrichtung (1) nach einem der vorstehenden Ansprüche 7 oder 8, **dadurch gekennzeichnet, dass** sich die Aushärtsubstanz von der Austrittsstelle u gleichmäßig in Umfangsrichtung, Radialrichtung und Axialrichtung sowohl in den Spaltraum (31) als auch in Richtung der Gebäudewand verteilt.

10. Vorrichtung (1) nach einem der vorstehenden Ansprüche, **dadurch gekennzeichnet, dass** sich der Verteilungskanal (19) von einem Einlasskanal (22) über einen daran anschließenden Übergangskanalabschnitt (20) längs über die Hälfte der axialen Länge der Verteilermanschette (3) an deren Innenseite erstreckt, wobei eine Aufweitung (16) im Bereich des Übergangskanalabschnitts (20) gebildet ist, die eine stufenweise Querschnittsveränderung vom Einlasskanal (22) hin zum Verteilungskanal (19) bildet.

11. Vorrichtung (1) nach einem der vorstehenden Ansprüche, **dadurch gekennzeichnet, dass** der Ringraumspalt (31) zwischen 1,5 mm und 2,5 mm liegt und/oder der Außendurchmesser der Verteilermanschette (3) größer als 10 mm und kleiner als 100 mm dimensioniert ist.

12. Vorrichtung (1) nach einem der vorstehenden Ansprüche, dadurch **gekennzeich-net,** dass der Ringspaltraum (31) eine konstante radiale Breite längs der Erstreckung der Leitungsdurchführung aufweist.

13. Vorrichtung (1) nach einem der vorstehenden Ansprüche, **dadurch gekennzeichnet, dass** die Verteilermanschette (3) ein der Gebäudeinnenseite (I) zugewandtes hülsenförmiges Dichtende aufweist, welches eine zylindrische Innendichtfläche bildet, welche einen Innendurchmesser aufweist, der derart an einen konstanten Außendurchmesser der Leitungsdurchführung angepasst ist, dass eine spielfreie Passung zwischen der Leitungsdurchführung und der Verteilermanschette (3) gebildet ist, um eine Abdichtung gegenüber einem axialen Austritt der Aushärtsubstanz aus dem Ringspaltraum (31) zu realisieren.

14. Verfahren zum Befestigen und Abdichten einer durch einen Wanddurchgang (8) einer Gebäudewand führenden Leitungsdurchführung, wie eines Leerrohres (5), an und gegenüber der Gebäudewand, bei dem eine Verteilermanschette derart dimensioniert wird, dass bei konzentrischer Anordnung der Verteilermanschette um die Leitungsdurchführung herum ein kreisringförmiger Spaltraum (31) gebildet wird, dessen radiale Breite größer als 0,5 mm und kleiner als 5 mm gebildet ist, und bei dem eine Aushärtsubstanz über einen an einer Innenseite der Verteilermanschette (3) gebildeten, sich in axialer Längsrichtung der Verteilermanschette (3) erstreckenden Verteilungskanal (19) geleitet wird und über mehrere Durchgangsschlitze oder Durchgangslöcher (15) der Verteilermanschette (3) radial von der Innenseite der Verteilermanschette (3) hin zu dessen Außenseite passiert.

15. Verfahren nach Anspruch 14, bei dem ein mit der Verteilermanschette einstückig gefertigter Anlageflansch (11) an einer Gebäudewandseite angebracht wird, wobei an dem Anlageflansch eine Aushärtsubstanz eingespritzt wird, um die Leitungsdurchführung an dem Wanddurchgang zu befestigen.

## Claims

1. Apparatus (1) for mounting and sealing of a cable feedthrough, such as an empty pipe (5), fed through a wall passage of a building wall provided at and opposite to a building wall, comprising the cable feedthrough, a distribution sleeve (3) surrounding the cable feedthrough, having a bounding body (13) with several passage slits or passage holes (15) for a radial leakage of the hardening substance from an inner side of the distribution sleeve (3) to an outer side, and an annularly surrounding ring gap space (31) formed by ab outer side of the cable feedthrough and an inner side of the distribution sleeve (3), the radial width of the ring space gap being larger than 0.5 mm and smaller than 5 mm, wherein a distribution channel (19) extending in an axial longitudinal direction of the distribution sleeve (3) being formed at the inner side of the bounding body (13) for feeding through the hardening substance.

2. Apparatus (1) according to claim 1, **characterized in that** the distribution channel (19) extends from an inlet channel (22) via a transition channel section (20) longitudinally over half of the axial length of the distribution sleeve 3 at its inner side.

3. Apparatus (1) according to claim 1 or 2, **characterized in that** the distribution channel (19) is formed by a channel structure being partly delimited by the bounding body (13), the channel structure being open towards the empty pipe (5) and also being delimited by same.

4. Apparatus (1) according to one of the claims 1 to 3, **characterized in that** the distribution channel (19) is delimited by two long ribs (32) in the circumferential direction extending in the longitudinal direction, which are formed in an integral manner with the bounding body (13) and are resting on the empty pipe essentially sealingly and thereby inhibiting a lateral circumference leaking out of the distribution channel (19).

5. Apparatus (1) according to claim 1, **characterized in that** the long ribs (32) end after about half of the total axial extension of the distribution sleeve (3), where also the distribution channel 19 ends, so that the hardening substance leaking out there can spread in the circumferential, radial and axial direction freely.

6. Apparatus (1) according to one of the preceding claims, **characterized in that** the distribution channel (19) does not extend axially over the total longitudinal extension of the bounding body (13), but extends over at least half, but less than three fourths of the total longitudinal extension of the bounding body (13).

7. Apparatus (1) according to one of the preceding claims 4 or 5, **characterized in that** distribution channel (19) ends with the recess of the long ribs (32) towards the inner side of the cylindrical bounding body (13) an outlet portion u.

8. Apparatus (1) according to claim 7, **characterized in that** distribution channel (19) allows a leakage in the circumferential direction only from the outlet portion u, so that a paste-like hardening substance leaks into the entire gap space (31), starting from the outer position u, the past-like hardening material being introduced via the injection nozzle (21).

9. Apparatus (1) according to one of the preceding claims 7 or 8, **characterized in that**, from the portion u, the hardening substance distributes in the circumferential direction, radial direction and axial direction uniformly as well as into the gap space (31) as well as in the direction of the wall of the building.

10. Apparatus (1) according to one of the preceding claims, **characterized in that** the distribution channel (19) is extends longitudinally over half of the axial length of the distribution sleeve (3) at its inner side, wherein a widening (16) is formed that to creates a stepwise cross-section change starting from the inlet channel (22) towards distribution channel (19).

11. Apparatus (1) according to one of the preceding claims, **characterized in that** the ring gap space is between 1.5 mm and 2.5 mm and/or the outer diameter of the distribution sleeve (13) is larger than 10 mm and/or smaller than 100 mm.

12. Apparatus (1) according to one of the preceding claims, **characterized in that** the ring gap space has a constant radial width lengthwise of the extension of the cable feedthrough.

13. Apparatus (1) according to one of the preceding claims, **characterized in that** the distribution sleeve has a sleeve-shaped sealing end facing the building inner side, the sealing end forming a cylindrical inner sealing face having an inner diameter being adapted to a constant outer diameter of the cable feedthrough in such a way that a play-free fitting is formed between the cable feedthrough and the distribution sleeve (3), in order to realize a sealing against an axial leakage of the hardening substance from the ring gap space (31).

14. Method for mounting and sealing of a cable feedthrough, such as an empty pipe, fed through a wall passage (8) of a building wall, at and opposite to a building wall, at which a distribution sleeve (3) is dimensioned in such a way that a circular ringshaped gap space (31) is formed in case of a concentric arrangement of the distribution sleeve around the cable feedthrough, the gap space being formed with a radial width larger than 0.5 mm and particularly smaller than 5 mm, and at which a hardening substance is guided via a distribution channel formed at the inner side of the distribution sleeve (3) and extending in axial longitudinal direction of the distribution sleeve (3) and passing several passage slits or passage holes (15) of the distribution sleeve (3) radially from the inner side of the distribution sleeve (3) towards its outer side.

15. Method according to claim 14, wherein an abutting flange (11) fabricated with the distribution sleeve (3) in an integral manner is mounted to a side of the building wall, wherein a hardening substance is injected at the abutting flange (11) in order to mount the cable feedthrough at the wall passage.

## Revendications

1. Dispositif (1) pour fixer et étanchéifier un passage de conduit passant à travers un passage mural (18) d'une paroi de bâtiment, comme un fourreau (5), sur et en face de la paroi de bâtiment, comprenant le passage de conduit, un manchon de distribution (3) entourant le passage de conduit, qui comporte un corps d'enveloppe (13) avec plusieurs fentes de passage ou trous de passage (15) pour un passage radial d'une substance durcissante d'un côté intérieur du manchon de distribution (3) vers le côté extérieur de celui-ci et un espace de séparation annulaire (31) périphérique de forme annulaire se formant entre un côté extérieur du passage de conduit et un côté intérieur du manchon de distribution (3) dont la largeur radiale est formée supérieure à 0,5 mm et inférieure à 5 mm, sachant qu'un conduit de distribution (19) s'étendant en direction longitudinale axiale du manchon de distribution (3) sur un côté intérieur du corps d'enveloppe (13) est formé pour transférer la substance durcissante.

2. Dispositif (1) selon la revendication 1, **caractérisé en ce que** le conduit de distribution (19) s'étend d'un conduit d'entrée (22) sur une section de conduit de transfert (20) s'y raccordant, longitudinalement sur la moitié de la longueur axiale du manchon de distribution (3) sur le côté intérieur de celui-ci.

3. Dispositif (1) selon la revendication 1 ou 2, **caractérisé en ce que** le conduit de distribution (19) est formé sous la forme d'une structure de conduit en partie limitée par le corps d'enveloppe (13), laquelle est ouverte vers le fourreau (5) et est également limitée radialement par celui-ci.

4. Dispositif (1) selon l'une quelconque des revendications 1 à 3, **caractérisé en ce que** le conduit de distribution (19) est limité dans la direction périphérique par deux nervures longitudinales (32) s'étendant en L dans la direction longitudinale, qui sont constituées en une seule pièce avec le corps d'enveloppe (13) et reposent pour l'essentiel de façon hermétique sur le fourreau (5) et évitent de ce fait un écoulement périphérique latéral du conduit de distribution (19) de telle manière en particulier que la substance durcissante pâteuse s'écoule exclusivement le long du conduit de distribution (19) qu' en raison de la pression d'injection.

5. Dispositif (1) selon la revendication 4, **caractérisé en ce que** les nervures longitudinales (32) se terminent après à peu près la moitié de l'extension totale axiale du manchon de distribution (3), où se termine également le conduit de distribution (19) de telle manière que la substance durcissante sortant à cet endroit peut librement se propager en direction périphérique, radiale et axiale.

6. Dispositif (1) selon l'une quelconque des revendications précédentes, **caractérisé en ce que** le conduit de distribution (19) ne s'étend pas axialement sur toute l'extension longitudinale du corps d'enveloppe (13), mais sur au moins la moitié mais moins des trois quarts de l'extension totale longitudinale du corps d'enveloppe (13).

7. Dispositif (1) selon l'une quelconque des revendications 4 ou 5, **caractérisé en ce que** le conduit de distribution (19) se termine à un emplacement de sortie u avec le retrait des nervures longitudinales (32) vers le côté intérieur du corps d'enveloppe cylindrique (13).

8. Dispositif (1) selon la revendication 7, **caractérisé en ce que** le conduit de distribution (19) ne permet une sortie dans la direction périphérique qu'à partir de l'emplacement de sortie u de telle manière qu'une substance durcissante pâteuse, qui peut être introduite par une tubulure d'injection (21), parvient dans tout l'espace de séparation (31) à partir de l'emplacement de sortie u.

9. Dispositif (1) selon l'une quelconque des revendications 7 ou 8, **caractérisé en ce que** la substance durcissante se propage de l'emplacement de sortie u de façon uniforme en direction périphérique, en direction radiale et en direction axiale tant dans l'espace de séparation (31) qu'en direction de la paroi de bâtiment.

10. Dispositif (1) selon l'une quelconque des revendications précédentes, **caractérisé en ce que** le conduit de distribution (19) s'étend d'un conduit d'entrée (22) sur une section de conduit de transfert (20) s'y raccordant le longitudinalement sur la moitié de la longueur axiale du manchon de distribution (3) sur le côté intérieur de celui-ci, sachant qu'un élargissement (16) est formé dans la zone de la section de conduit de transfert (20), qui forme une modification de section progressive du conduit d'entrée (22) au conduit de distribution (19).

11. Dispositif (1) selon l'une quelconque des revendications précédentes, **caractérisé en ce que** le l'espace de séparation annulaire (31) se situe entre 1,5 mm et 2,5 mm et/ou le diamètre extérieur du manchon de distribution (3) est dimensionné supérieur à 10 mm et inférieur à 100 mm.

12. Dispositif (1) selon l'une quelconque des revendications précédentes, **caractérisé en ce que** l'espace de séparation annulaire (31) comporte une largeur radiale constante le long de l'extension du passage de conduit.

13. Dispositif (1) selon l'une quelconque des revendications précédentes, **caractérisé en ce que** le manchon de distribution (3) comporte une extrémité étanche en forme de manchon tournée vers le côté intérieur du bâtiment (I), laquelle forme une surface étanche intérieure cylindrique, laquelle comporte un diamètre intérieur qui est adapté à un diamètre extérieur constant du passage de conduit de telle manière qu'un ajustage sans jeu est formé entre le passage de conduit et le manchon de distribution (3) pour réaliser une étanchéification vis-à-vis d'une sortie axiale de la substance durcissante de l'espace de séparation annulaire (31).

14. Procédé pour fixer et étanchéifier un passage de conduit passant à travers un passage mural (8) d'une paroi de bâtiment, comme un fourreau (5), sur et en face de la paroi de bâtiment, pour lequel un manchon de distribution est dimensionné de telle manière qu'avec une disposition concentrique du manchon de distribution autour du passage de conduit, un espace de séparation (31) en forme d'anneau circulaire est formé, dont la largeur radiale est formée supérieure à 0,5 mm et inférieure à 5 mm et pour lequel une substance durcissante est dirigée par le biais d'un conduit de distribution (19) formé sur un côté intérieur du manchon de distribution (3), s'étendant en direction longitudinale axiale du manchon de distribution (3) et passe par plusieurs fentes de passage ou trous de passage (15) du manchon de distribution (3) radialement du côté intérieur du manchon de distribution (3) au côté extérieur de celui-ci.

15. Procédé selon la revendication 14 pour lequel une bride d'appui (11) fabriquée en une pièce avec le manchon de distribution est placée sur un côté de la paroi de bâtiment, sachant qu'une substance durcissante est injectée sur la bride d'appui pour fixer le passage de conduit sur le passage mural.
